# EUROPEAN PATENT APPLICATION

(11) **EP 2 368 641 A1**
(43) Date of publication of application: **28.09.2011**
(21) Application number: 09834905.3
(22) Date of filing: 24.12.2009
(51) Int. Cl.: B05B 5/08, B05D 1/06, B05D 7/24, B05B 15/12

(54) **POWDER COATING DEVICE AND POWDER COATING METHOD**

(30) Priority: 24.12.2008 JP 2008328030; 24.12.2008 JP 2008328043; 14.04.2009 JP 2009098176; 01.05.2009 JP 2009112023; 31.08.2009 JP 2009199953
(71) Applicant: Honda Motor Co., Ltd., Minato-ku Tokyo 107-8556 (JP)
(72) Inventor: YAMAGUCHI, Masayuki, Tochigi 321-3395 (JP); KAIJU, Haruhisa, Aichi, 488-0852 (JP)
(74) Representative: Beder, Jens
(86) International application number: PCT/JP2009/071372
(87) International publication number: WO 2010/074107

(57) **Abstract**

The powder coating apparatus is provided with a coating booth into which a ground-connected object to be coated can be delivered and a plurality of coating tools respectively provided on the coating booth and adapted to discharge electrically charged powder coating materials onto the object to be coated. At least two of the coating tools are disposed on walls of the coating booth such that discharge openings thereof for discharging the powder coating materials are opposed to each other. The respective opposed discharge openings simultaneously discharge the powder coating materials onto the object to be coated. The powder coating materials, which are discharged from one of the at least two coating tools and are diffusing in the interior portion of the coating booth, are moved up to the object to be coated by a delivering air discharged together with the powder coating materials from the other of the two coating tools.

## Description

### Technical Field:

The present invention relates to a powder coating apparatus and a power coating method for applying powder coating materials to an object to be coated to thereby coat the object with the powder coating materials.

### Background Art:

As a method for coating an object to be coated with coating materials, there is known a so called a powder coating method in which an object to be coated, which is connected to the ground, is delivered into a coating booth and then electrically charged powder coating materials are jetted into the coating booth. In this case, after the powder coating materials are jetted together the delivering air, they are attracted to the object to be coated due to the electrostatic action generated between the object to be coated and powder coating materials, and finally, they are applied to the object to be coated.

In the electrostatic coating method, it is required that the coated films of the object to be coated should be uniform in thickness. In view of this, in the patent reference 1 (JP-A-09-038527), there is proposed a technology in which powder coating materials are charged not toward the object to be coated but toward a space existing within a coating booth to thereby uniform the density of the powder coating materials contained in the atmosphere within the coating booth.

However, in the conventional technology disclosed in the patent reference 1, since the coating booth must be filled with the powder coating materials, there are present a lot of powder coating materials that are not applied to the object to be coated. The uncoated powder coating materials are collected and are discharged again. Thus, since the quantity of the powder coating materials to be collected increases, the quantity of the powder coating materials to be recycled for recycling use increases.

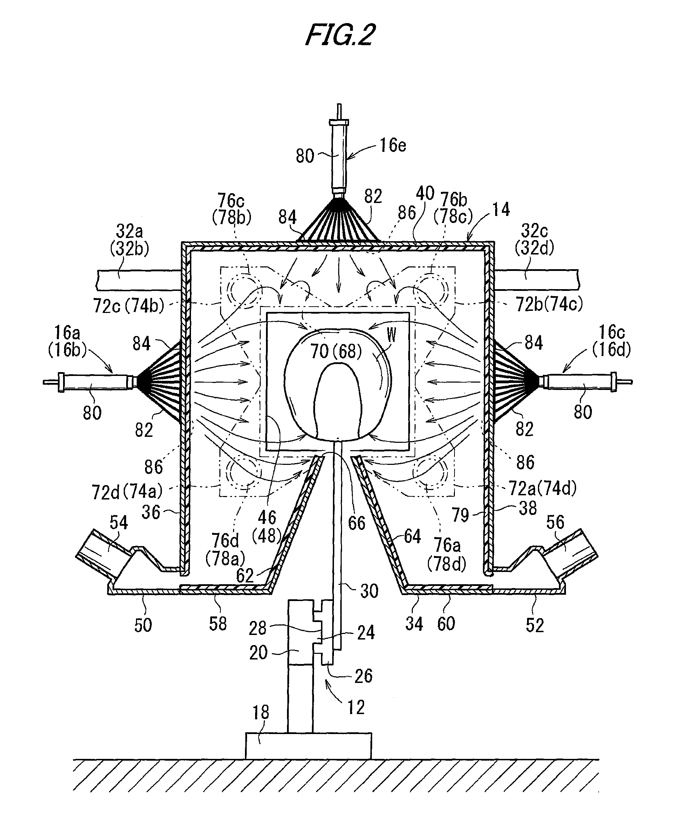

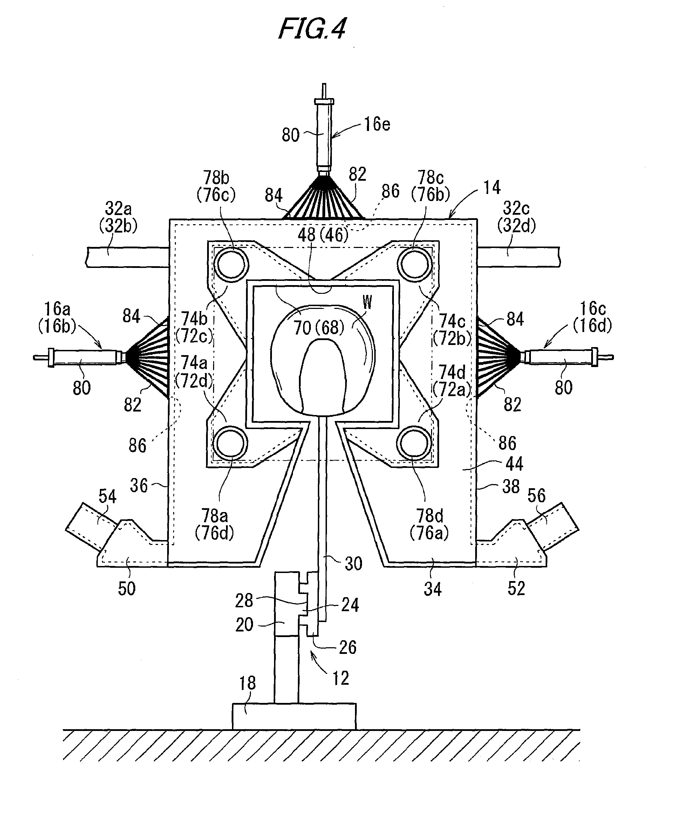

Also, in this conventional technology, as can be seen from Figs. 2 and 4 to 7 accompanying the specification of the patent reference, within the coating booth, there are provided coating guns. In this case, since the powder coating materials are attached to the coating guns in a short time, the coating guns must be maintained frequently. Since, during such maintenance, the coating operation cannot be carried out, the efficiency of the operation to coat the object to be coated with the powder coating materials is deteriorated.

As described above, in the conventional technology disclosed in the patent reference 1, there are found problems: that is, since there are produced a lot of uncoated powder coating materials, the amount of the operation necessary for execution of post-treatment on such powder coating materials increases; and, the high frequency of maintenance on the coating guns deteriorates the efficiency of the coating operation.

Further, in the patent reference 1, there is found no description as to how to improve the collection efficiency of the powder coating materials. Therefore, it is impossible to obtain any knowledge of such improvement from the description of the patent reference 1.

And, in this type of powder coating materials coating technology, in some cases, in order to prevent the powder coating materials from leaking to the outside of the coating booth, for example, there is opened up an air exhaust port in the coating booth to thereby form an air curtain. That is, in this case, the flow of the powder coating materials can be retained by the air curtain, whereby the powder coating materials can be held within the coating booth.

The air curtain is also used to separate the coating booth into multiple operation booths. In connection with this technology, in the patent reference 2 (JP-A-04-349960), there is proposed a separation apparatus in which, in order to prevent the powder coating materials discharged into an arbitrary one of the operation booths from entering its adjoining operation booth, there is formed an air suction opening in the vicinity of the air curtain and the air jetted out from the air discharged from the air exhaust opening can be sucked in from the air suction opening.

According to the conventional technology disclosed in the patent reference 2, as described above, the interior of the coating booth is separated into the multiple operation booths by the separation apparatus. In this case, the powder coating materials are retained by the air curtain formed by the separation apparatus and, after then, they are sucked into the air suction opening together with the air. However, in the patent reference 2, there is found no description about a route through which, after the powder coating materials are sucked by the air suction opening, they are collected and are discharged again.

That is, even with reference to the conventional technology disclosed in the patent reference 2, it is not easy to have knowledge of improvement in the collection efficiency of the powder coating materials.

### [Prior Art Technology Reference]

### [Patent Reference]

[Patent Reference 1] JP-A-09-038527 (especially, refer to the paragraphs [0011] and [0012])
[Patent Reference 2] JP-A-04-349960

### Summary of Invention:

According to one or more embodiments of the invention, there are provided a powder coating apparatus and a powder coating method which can efficiently coat an object to be coated with powder coating materials and also can reduce the frequency of maintenance of coating guns.

According to one or more embodiments of the invention, a powder coating apparatus is provided with: a coating booth into which a ground-connected object to be coated can be delivered; and, multiple coating tools respectively provided in the coating booth for discharging electrically charged powder coating materials to the object to be coated. At least two of the multiple coating tools are provided on the wall of the coating booth in such a manner that their respective discharge openings for discharging the powder coating materials therefrom are disposed opposed to each other. These opposed discharge openings are respectively structured such that the powder coating materials can be discharged simultaneously therefrom to the object to be coated. The powder coating materials discharged from one of the-above-mentioned at least two coating tools and diffused into the interior portion of the coating booth are delivered up to the object to be coated by delivering air discharged together with the powder coating materials from the other coating tool.

That is, according to the above-structured powder coating apparatus, the delivering air discharged together with the powder coating materials from the discharge opening of the other coating tool is caused to interfere with the powder coating materials discharged from the discharge opening of one coating tool. Therefore, for example, the powder coating materials going to diffuse upwardly within the coating booth are caused to collide with the delivering air discharged from the discharge opening of the opposed coating tool and going to diffuse upwardly, with the result that the powder coating materials are turned into a state where the kinetic energy thereof applied thereto from the delivering air when they are discharged, and they are thereby allowed to diffuse and float in the periphery of the object to be coated.

The powder coating materials going to diffuse downwardly, similarly, are caused to collide with the delivering air discharged from the discharge opening of the opposed coating tool and going to diffuse downwardly. Due to this, such powder coating materials are also allowed to diffuse and float in the periphery of the object to be coated.

The powder coating materials, which have diffused and floated in the periphery of the object to be coated in this manner, are attracted to the object to be coated due to the electrostatic action generated between them. Therefore, the powder coating materials can be applied to the object to be coated with high efficiency. That is, the coating efficiency can be enhanced.

Also, as described above, since the powder coating materials are stuck to the object to be coated due to the electrostatic action after they have diffused and floated, the thicknesses of the coated films of the object to be coated can be made substantially uniform regardless of the shape of the object to be coated. For example, in the case that an electrostatic coating operation is carried out using a robot or the like holding coating tools, in order to make uniform the thicknesses of the coated films, there is necessary a strict teaching which can create a locus corresponding to the uniform thicknesses. According to the invention, there can be omitted such strict teaching. That is, the electrostatic coating operation can be easily carried out on the object to be coated. In addition, it is easy to obtain the coated films that are substantially uniform in thickness.

Also, in this case, since the quantity of the powder coating materials uncoated is reduced, the quantity of collection of the powder coating materials and the quantity of the powder coating materials to be recycled can be both reduced. This makes it also possible to reduce the cost that is necessary for the recycling treatment of the powder coating materials.

And, according to the above-structured powder coating apparatus, the discharge openings of the above-mentioned at least two coating tools may also be respectively formed in the two side walls of the coating booth respectively extending substantially parallel to the advancing direction of the object to be coated in such a manner that they are disposed opposed to each other. At least one of the coating tools may also be disposed in the wall of the coating booth bridged between and over the two side walls and extending substantially parallel to the advancing direction of the object to be coated. And, the powder coating materials discharged from the coating tool provided on the wall bridged between and over the two side walls may also be caused to collide with the powder coating materials discharged from the coating tools provided on the two side walls.

In this case, the powder coating materials, which are discharged from at least two coating tools provided on the two side walls of the coating booth and are going to diffuse upwardly, collide with the delivering air discharged from at least one coating tool provided on the wall bridged between and over the two side walls, that is, the ceiling wall or bottom wall of the coating booth, with the result that the powder coating materials are caused to flow downwardly or upwardly. Therefore, while the quantity of the powder coating materials flowing toward the object to be coated increases further, the quantity of the powder coating materials to be recycled decreases further. This can enhance the coating efficiency and can further reduce the cost necessary for the recycling treatment.

Also, according to the above-structured powder coating apparatus, the main bodies of the coating tools may also be respectively disposed on the outer wall of the coating booth, and the discharge openings may also be respectively formed in the inner wall of the coating booth. This can prevent the powder coating materials from sticking to the coating tools, thereby being able to reduce the frequency of maintenance of the coating tools greatly. Therefore, the frequency of interruption of the coating operation for maintenance of the coating tools can be reduced, which results in the enhanced coating operation efficiency.

Further, due to this, the dimensions of the coating booth and thus the volume thereof can be reduced. Specifically, since it is not necessary to store the coating tools within the coating booth, there is eliminated the need to form a space for storing the coating tools within the coating booth.

According to the above-structured powder coating apparatus, since the discharge openings are disposed opposed to each other, the powder coating materials, which are discharged from one discharge opening and are going to diffuse within the coating booth, collide with the delivering air discharged together with the powder coating materials from the other discharge opening. Due to this, the powder coating materials lose their kinetic energy and turn into a diffusing and floating state. The powder coating materials in this state can be easily attracted toward the object to be coated due to the electrostatic action and can be thereby stuck to the object to be coated. For the above reasons, the coating efficiency of the object to be coated can be enhanced.

On the other hand, since the quantity of the uncoated powder coating materials decreases, the quantity of collection of the powder coating materials and the recycling quantity for recycling them can be reduced. Therefore, since the cost necessary for the recycling treatment is reduced, the present powder coating apparatus is advantageous in term of cost.

Further, in the case that the gun main bodies are disposed outside the coating booth, the frequency of maintenance of the coating tools is reduced. This can enhance the efficiency of the coating operation of the object to be coated.

Moreover, since the powder coating materials stick to the object to be coated through the electrostatic action after they diffuse and float, regardless of the shape of the object to be coated, the coated films of the whole of the object to be coated can be made substantially uniform. This can eliminate a strict teaching or the like on a robot, whereby the electrostatic coating operation can be facilitated and also coated films substantially uniform in thickness can be provided easily.

Also, according to one or more embodiments of the invention, there are provided a powder coating apparatus and a powder coating method which can enhance the collection efficiency of powder coating materials with a simple structure and also can prevent the powder coating materials from leaking from a coating booth and can prevent dust or the like from invading into the coating booth from outside.

According to one or more embodiments of the invention, there is provided a powder coating apparatus, comprising: a coating booth into which a ground-connected object to be coated can be delivered and also which includes an introduction opening for introducing the object to be coated into the coating booth and a discharge opening for discharging the object to be coated from the coating booth; a coating tool provided on the coating booth for discharging electrically charged powder coating materials to the object to be coated; a powder coating material collecting mechanism including a suction mechanism for sucking uncoated powder coating materials discharged from the coating tool but not coated onto the object to be coated; and, multiple duct hose connecting portions respectively formed in the vicinity of the introduction opening and the discharge opening. The uncoated powder coating materials are sucked together with the air existing inside and outside the coating booth from duct hoses respectively connected to the duct hose connecting portions and are collected by the powder coating material collecting mechanism.

In the above-structured powder coating apparatus, the air existing inside and outside the coating booth are sucked from the respective neighboring portions of the introduction opening and discharge opening. Therefore, even in the case that the pressure in one of the inside and outside of the coating booth is lower than the pressure in the other to provide a so called negative pressure state, thereby causing the air to flow to the outside from the coating booth or vice versa, the dust and uncoated powder coating materials can be collected from the duct hoses. Owing to this, without balancing the pressure of the inside of the coating booth with the pressure of the outside thereof, the leakage of the powder coating materials from within the coating booth and the mixture of dust or the like into the coating booth from outside can be both prevented at the same time.

Also, the uncoated powder coating materials sucked together with the air are collected by the powder coating material collecting mechanism. After then, after a proper recycling treatment is carried out on the collected powder coating materials, they are discharged again from the coating tool. This can enhance the collection efficiency and use efficiency of the powder coating materials greatly.

In the case of the multiple duct hose connecting portions, for example, at least four of them may also be disposed at positions which respectively correspond to the four corner portions of a quadrangle. In this case, the air existing within the coating booth is allowed to efficiently flow toward the duct hose connecting portions. That is, there can be provided a so called a rectification effect easily.

The multiple duct hose connecting portions may also be formed in hoods which are mounted in the respective neighboring portions of the introduction opening and discharge opening. In this case, the hoods may also be structured such that they respectively include an X-shaped portion, and duct hose connecting portions may be formed in the leading ends of the X-shaped portions respectively.

Further, in the bottom portion of the other end face of the coating booth than the end face thereof where the multiple duct hose connecting portions are formed, there may also be formed other duct hose connecting portions than the duct hose connecting portions, and the uncoated powder coating materials may be sucked also from duct hoses respectively connected to the other duct hose connecting portions. By sucking the powder coating materials from multiple portions in this manner, the quantity of the powder coating materials remaining within the coating booth can be reduced greatly. This can enhance the collection efficiency of the powder coating materials further.

In the above-mentioned structure, the coating booth may also be constituted of an insulating material. Or, on the inner wall of the coating booth, there may be provided a protection member constituted of an insulating material.

As described above, the powder coating materials are attracted to the object to be coated through the electrostatic action. On the other hand, such electrostatic action is prevented from being generated between the powder coating materials and the coating booth constituted of an insulating material or the protection member constituted of an insulating material. Therefore, the powder coating materials discharged from the coating tool and the uncoated coating materials, which have not stuck to the object to be coated but floated, are prevented from being attracted to the coating booth. This can enhance the ratio of the powder coating materials that are allowed to stick to the object to be coated, and also can enhance the collection efficiency of the uncoated powder coating materials.

Further, in this case, since the powder coating materials are hard to stick to the coating booth or protection member, the cleaning of the interior portion of the coating booth can be facilitated greatly. This can reduce the cleaning time when a coating color is changed and thus can reduce the cycle time.

As the insulating material, preferably, there may be used polyester foam. Since polyester foam contains a lot of air bubbles therein, it provides a high insulating property. That is, in this case, the powder coating materials can be prevented further from being attracted to the coating booth.

The walls of the upper portion of the coating booth may be bent or curved in their mutually approaching direction as they become distant from the object to be coated. In this case, the powder coating materials discharged from the coating tool are hard to stick to the thus bent or curved walls. Therefore, for example, when the coating color is changed, the time necessary to clean the coating booth or protection member can be shortened further and thus the cycle time can be shortened further.

Also, the coating booth may include a discharge opening for discharging compressed gas toward the interior portion of the coating booth. Due to this, for example, in the case that, when changing the coating color, the compressed gas is discharged from such discharge opening, the powder coating materials, which have stuck to the coating booth or protection member, can be removed easily. Also, while the powder coating materials are being discharged from the coating tool to thereby carry out the coating operation, the compressed gas may be discharged from the discharge opening toward the inner wall of the coating booth, namely, a so called air blow may be carried out, whereby the cleaning operation may be carried out simultaneously with the coating operation.

According to the above-structured powder coating apparatus, since the air existing inside and outside the coating booth is sucked in from the respective neighboring portions of the introduction opening and discharge opening, the leakage of the powder coating materials from within the coating booth and the mixture of dust or the like into the coating booth from outside can be both prevented. Further, in this case, it is not specifically essential to balance the pressure within the coating booth with the pressure outside the coating booth, which makes it easy to control the present apparatus.

Also, there is employed a structure in which the uncoated powder coating materials sucked together with the air are collected by the powder coating material collecting mechanism and can be then discharged again from the coating tool. Therefore, the collection efficiency of the powder coating materials and the use efficiency thereof can be enhanced greatly.

Further, according to one or more embodiments of the invention, there are provided a powder coating apparatus and a powder coating method which can form coated films substantially uniform in thickness over the whole of the object to be coated and also can enhance the collection efficiency of the uncoated powder coating materials.

According to one or more embodiments of the invention, there is provided a powder coating apparatus, comprising: a coating booth into which an object to be coated connected to the ground can be delivered; and, multiple coating tools respectively provided on the coating booth for discharging electrically charged powder coating materials together with delivering gas to the object to be coated. At least two of the multiple coating tools are provided on the two walls of the coating booth that are disposed opposed to each other. And, the present powder coating apparatus further includes a control mechanism which, when the powder coating materials and delivering gas are discharged into the coating booth from the discharge openings of the coating tools respectively provided on the walls, can control the discharge quantity of powder coating materials and delivering gas. Specifically, the control mechanism sets the discharge quantity when the powder coating materials and delivering gas are discharged into the coating booth from the respective discharge openings in a ratio to be expressed in the following equation (1), that is, the discharge quantity of the discharge opening of one of the two walls: the discharge quantity of the discharge opening of the other = 100: 80 to 120-(1).

In the case that the discharge quantities of the respective discharge openings of the coating tools respectively provided on the mutually opposed walls are set substantially equal to each other in this manner, the energy of the powder coating materials and the energy of the delivering gas are substantially equal to each other, whereby the powder coating materials are allowed to float substantially evenly in the periphery of the object to be coated. Since the powder coating materials in this state are attracted to the object to be coated due to the electrostatic action, there can be obtained the coated films that are substantially uniform in thickness.

In this manner, according to the above structure, over the whole of the object to be coated, there can be easily formed the coated films that are substantially uniform in thickness.

Here, the total of discharge quantities from all of the coating tools and the suction quantity of the powder coating material uncoated to be exhausted from the coating booth may also be set in a ratio to be expressed in the following equation, that is, the total of the discharge quantities: the suction quantity = 100: 80 to 120 --- (2).

Supposing that the pressure within the coating booth is excessively positive, the powder coating materials sprayed into the coating booth are discharged outside the coating booth before they are attracted to the object to be coated. Also, supposing that the pressure within the coating booth is excessively negative, it is difficult to collect the uncoated powder coating materials and there is a fear that dust, garbage or the like can be sucked into the coating booth. On the other hand, as described above, in the case that the discharge quantity from the coating tools into the coating booth is allowed to balance substantially with the suction quantity (exhaust quantity) from the coating booth, the pressure within the coating booth can be prevented from being excessively positive or negative.

That is, in this case, it is possible to prevent the powder coating materials from being discharged outside the coating booth before they are attracted to the object to be coated, and also to prevent dust, garbage or the like from being sucked into the coating booth. Further, the uncoated powder coating materials can be collected efficiently. In short, the collection efficiency of the uncoated powder coating materials can be enhanced.

According to the above structure, the discharge quantities from the coating tools respectively provided on the mutually opposed walls are allowed to substantially balance with each other, and the energy of the powder coating materials and the energy of the delivering gas are thereby allowed to be substantially equal to each other. Thanks to this, the powder coating materials are allowed to float substantially evenly in the periphery of the object to be coated and, in this state, the powder coating materials are attracted to the object to be coated. This can easily provide the coated films that are substantially uniform in thickness.

Further, in the case that the discharge quantity from the coating tools and the exhaust quantity from the coating booth are set to substantially balance with each other, it is possible to prevent the pressure within the coating booth from being excessive positive or negative. This can facilitate the suction of the uncoated powder coating materials to the outside of the coating booth. Due to this, the powder coating materials can be collected efficiently. Further, there can be eliminated a possibility that the powder coating materials can be discharged outside the coating booth before they are attracted to the object to be coated, and a possibility that dust, garbage or the like can be sucked into the coating booth.

The other characteristics and effects are obvious from the description of the following embodiments and from the appended claims.

### Brief Description of Drawings:

[Fig. 1] Fig. 1 is a schematic perspective view of the whole of a powder coating apparatus according to an exemplary embodiment of the invention.
[Fig. 2] Fig. 2 is a schematic longitudinal section front view of the main portions of the powder coating apparatus shown in Fig. 1.
[Fig. 3] Fig. 3 is a schematic front view of the powder coating apparatus shown in Fig. 1.
[Fig. 4] Fig. 4 is a schematic front view of the main portions of the powder coating apparatus shown in Fig. 1.
[Fig. 5] Fig. 5 is a schematic side view of the whole of a coating gun (coating tool) constituting a part of the powder coating apparatus shown in Fig. 1.
[Fig. 6] Fig. 6 is a schematic side view of the whole of a powder coating material supply apparatus used to supply powder coating materials to the coating gun.
[Fig. 7] Fig. 7 is a graphical representation of the thicknesses of the coated films of an object to be coated in the case that, when the exhaust quantity from a coating booth is constant, the rate of the discharge quantities of the coating guns disposed opposed to each other is varied.
[Fig. 8] Fig. 8 is a schematic longitudinal section front view of the main portions of a powder coating apparatus according to an another embodiment of the invention.
[Fig. 9] Fig. 9 is a schematic longitudinal section front view of the main portions of a powder coating apparatus according to a further another embodiment of the invention.
[Fig. 10] Fig. 10 is a schematic longitudinal section front view of the main portions of a powder coating apparatus according to a further another embodiment of the invention.
[Fig. 11] Fig. 11 is a schematic longitudinal section front view of the main portions of a powder coating apparatus according to a further another embodiment of the invention.

### Description of Embodiments:

Now, description will be given below specifically of exemplary embodiments of a powder coating apparatus and a powder coating method according to the invention with reference to the accompanying drawings.

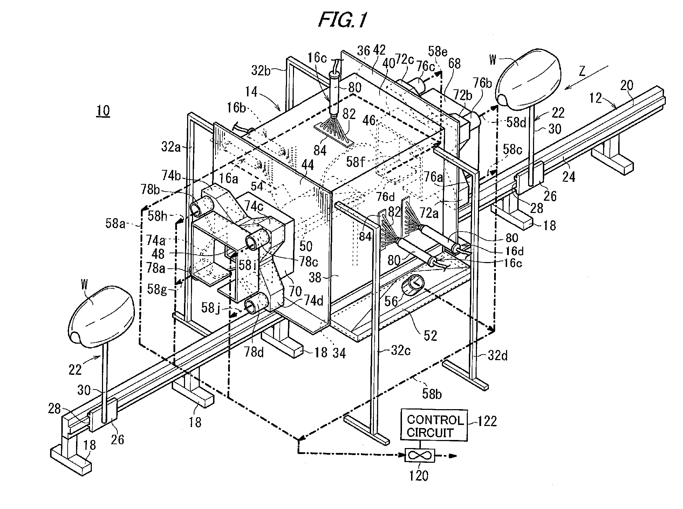

Fig. 1 is a schematic perspective view of the whole of a powder coating apparatus 10 according to an exemplary embodiment of the invention. This powder coating apparatus 10 includes a delivery mechanism 12 for delivering a work W serving as an object to be coated, a coating booth 14 into which the work W can be delivered, and coating guns (coating tools) 16a to 16e respectively provided on the coating booth 14.

The delivery mechanism 12 includes a delivery guide rail 20 supported on a support member 18 having a substantially inverted-T-like shape, and a work fixing base 22 supported on the delivery guide rail 20 in such a manner that it can be shifted in position. Specifically, on one side surface of the delivery guide rail 20, there is provided a projecting portion 24; and, the projecting portion 24 is engaged with an engagement groove 28 formed in one side surface of a base member 26 which constitutes the work fixing base 22.

To the other side surface of the base member 26, there is connected a cylindrical member 30. Further, on the leading end portion of the cylindrical member 30, there is provided a placing/fixing base (not shown). And, the work W is fixed on this placing/fixing base.

The base member 26 can be shifted along the delivery guide rail 20 under the operation of a drive mechanism (not shown). With the shifting motion of the base member 26, an uncoated work W is moved toward and delivered into the coating booth 14, while a coated work W is exposed and spaced from the coating booth 14. Here, in the present exemplary embodiment, the base member 26 is always shifting and, therefore, the work W is continuously moving along the arrow mark Z direction while it is delivered into the coating booth 14 and is discharged therefrom.

The coating booth 14, which is supported by frame members 32a to 32d, as shown in Figs. 1 and 2, includes a bottom wall 34, two side walls 36 and 38 respectively rising up from the bottom wall 34 substantially in a vertical direction and disposed substantially parallel to the advancing direction of the work W, a ceiling wall 40 so disposed as to extend between and on the two side walls 36 and 38, and an upstream side wall 42 and a downstream side wall 44 respectively used to close the advancing direction upstream side and downstream side of the work W. The connecting portions between the side walls 36, 38 and bottom wall 34, upstream side wall 42, downstream side wall 44 and ceiling wall 40 are so strongly connected to their respective walls that no clearance can be produced between them; and also, the connecting portions are sealed up.

Of course, in the upstream side wall 42, there is formed an introduction opening 46 through which the work W can be delivered into the coating booth 14. Similarly, in the downstream side wall 44, there is formed a discharge opening 48 from which the work W can be exposed. Also, the two side walls 36 and 38 are disposed opposed to each other.

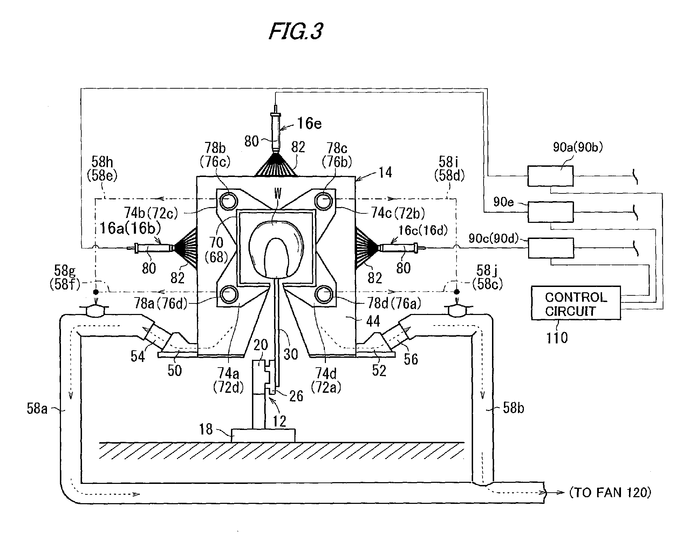

As shown in Fig. 2, between the bottom wall 34 and the respective side walls 36, 38, there are formed slight clearances respectively. And, there are formed hood portions 50 and 52 in such a manner that they respectively close these clearances. From these hood portions 50 and 52, there are projected duct hose connecting portions 54 and 56 each having a cylindrical shape in such a manner that they are respectively inclined slightly upwardly. As shown in Fig. 3, to these duct hose connecting portions 54 and 56, there can be connected duct hoses 58a and 58b respectively. Here, in Fig. 1, the duct hoses 58a and 58b are shown by virtual lines respectively.

Also, in the bottom wall 34, there are formed two horizontal portions 58 and 60 respectively extending substantially in the horizontal direction, and two inclined portions 62 and 64 which are respectively bent formed from the horizontal portions 58 and 60 and are inclined toward the ceiling wall 40. The two inclined portions 62 and 64 are spaced from each other to thereby provide a clearance 66 between them and, through this clearance 66, there can be inserted the cylindrical member 30.

As can be seen from Fig. 1, in this case, the height direction dimensions and width direction dimensions of the upstream side wall 42 and downstream side wall 44 are set such that the upstream side wall 42 and downstream side wall 44 can project from the side walls 36, 38 and ceiling wall 40. Also, the bottom portion end faces of the upstream side wall 42 and downstream side wall 44 are formed to be flush with the bottom wall 34. Further, in the upstream side wall 42 and downstream side wall 44, as shown in Figs. 1, 3 and 4, there are formed hood portions 68 and 70 each having a hollow, substantially quadratic prism shape in such a manner that they can be contacted with the end faces of the inclined portions 62, 64 and also can surround the introduction opening 46 and discharge opening 48 respectively.

From the respective vertexes of these hood portions 68 and 70, there are projected hollow flange portions 72a to 72d, 74a to 74d in such a manner that they extends along the respective diagonal lines and are substantially equal in dimension to each other. That is, these hollow flange portions 72a to 72d, 74a to 74d are formed such that they constitute an X-like shape in the respective hood portions 68 and 70.

And, in the respective leading end portions of the hollow flange portions 72a to 72d, 74a to 74d, there are formed duct hose connecting portions 76a to 76d, 78a to 78d which respectively have a substantially cylindrical shape and extend along the extending direction of the delivery guide rail 20, in other words, along the advancing direction (in Fig. 1, an arrow mark Z direction) of the work W. Since the hollow flange portions 72a to 72d, 74a to 74d form an X-like shape, when there is drawn a virtual line which passes through the respective duct hose connecting portions 76a to 76d, or through the respective duct hose connecting portions 78a to 78d, the locus of the virtual line provides a square or a rectangle. That is, the duct hose connecting portions 76a to 76d, 78a to 78d are respectively disposed at positions corresponding to the vertexes of a virtual quadrangle.

To these duct hose connecting portions 76a to 76d, 78a to 78d, there are connected duct hoses 58c to 58f, 58g to 58j (virtual lines shown in Figs. 1 and 3) respectively. The duct hoses 58c to 58f respectively join a duct hose 58a, while the duct hoses 58g to 58j respectively join a duct hose 58b. Further, the duct hoses 58a and 58b join each other to constitute an exhaust line, while this exhaust line is connected to a powder coating material collecting mechanism (not shown).

The interior portions of the hollow flange portions 72a to 72d, 74a to 74d respectively communicate with the interior portions of the hood portions 68, 70. That is, the powder coating materials, which have been guided through the hood portions 68, 70, are allowed to pass through the hollow flange portions 72a to 72d, 74a to 74d and duct hose connecting portions 76a to 76d, 78a to 78d, further through the duct hoses 58c to 58f, 58g to 58j, and are then collected by the powder coating material collecting mechanism.

To the inner wall of the above structured coating booth 14, as shown in Fig. 2, there is connected a protection member 79. Although the material of the protection member 79 is not limited to a specific material provided that it is an insulating material, preferably, for example, there may be used foamed polyester which contains air bubbles therein and thus has high insulating properties.

In this case, on the side wall 36, there are provided two coating guns 16a and 16b and, on the side wall 38, there are provided two coating guns 16c and 16d at the positions thereof that respectively correspond to the positions of the coating guns 16a and 16b. Further, on the ceiling wall 40, there is provided a coating gun 16e. Here, the coating guns 16a to 16e are all the same in structure; however, for convenience of explanation, they are given designations that are different from each other.

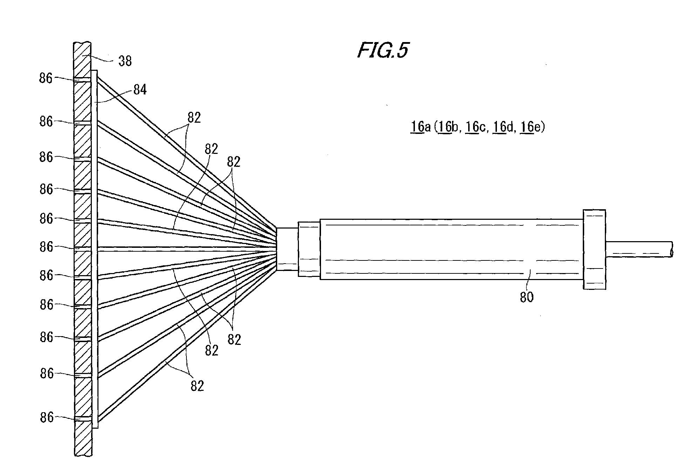

Here, in Fig. 5, there is shown a schematic side view of the whole of the coating gun 16c provided on the side wall 38. In this case, the coating gun 16c includes a gun main body 80 and eleven nozzle tubes 82 respectively extending and diverging radially from the gun main body 80. As the material of the gun main body 80 and nozzle tubes 82, there is chosen such material as to be able to generate frictional charge with respect to the powder coating materials that pass through the interior portions of the gun main body 80 and nozzle tubes 82 while the powder coating materials are creating friction with such interior portions. As the materials, preferably, there may be used tetrafuluoroethylene.

The eleven nozzle tubes 82 are converged by a single tube support member 84 in such a manner that they are arranged in series. Further, the tube support member 84 is contacted with or bonded to the side wall 84, and the terminal ends of the nozzle tubes 82, which have projected from the tube support member 84, are respectively inserted into their associated communication holes 86 which are respectively formed in the side wall 38. Here, in this case, the leading end faces of the respective terminal ends do not reach the inner wall of the side wall 38 but are situated in the intermediate portions of the communication holes 86.

As will be described later, the powder coating materials are discharged through the communication holes 86 from openings which are respectively formed in the terminal ends of the respective nozzle tubes 82. That is, the communication holes 86 function as discharge openings respectively.

Of course, the other remaining coating guns 16a, 16b, 16d and 16e are also structured similarly. Therefore, the same composing elements thereof are given the same reference numerals and thus the detailed description thereof is omitted here.

The terminal ends of the nozzle tubes 82 respectively constituting the coating guns 16a, 16b, 16d and 16e are also inserted into their associated communication holes 86 which are formed in the side wall 36 or ceiling wall 40. The leading end faces of the respective terminal ends, similarly to the terminal ends of the nozzle tubes 82 of the coating gun 16c, do not reach the inner wall of the side wall 36 or ceiling wall 40 but are situated in the intermediate portions of the respective communication holes 86.

The outside diameter of the nozzle tube 82 is slightly larger than the diameter of the communication hole 86. Therefore, the outer peripheral walls of the respective nozzle tubes 82 inserted into their associated communication nozzles 86 can be strongly tight contacted with the inner peripheral walls of the communication holes 86. This can prevent a clearance from being produced between the outer peripheral wall of the nozzle tube 82 and the inner peripheral wall of the communication hole 86, whereby the two walls can be held air tight with respect to each other.

Thus, not only due to the air tight contact between the outer peripheral walls of the nozzle tubes 82 and the inner peripheral walls of the communication holes 86 but also due to the strong tight contact and sealed treatment of the connecting portions of the side wall 36, 38 and bottom wall 34, upstream side wall 42, downstream side wall 44 and ceiling wall 40, the open air can be prevented from entering the interior portion of the coating booth 14.

And, as shown in Fig. 1, the coating guns 16a, 16b and coating guns 16c, 16d are disposed respectively in the side walls 36, 38 in such a manner that their respective gun main bodies 80, 80 are substantially opposed to each other.

On the respective upstream sides of the coating guns 16a to 16e structured in the above-mentioned manner, as shown in Fig. 3, there are provided powder coating material supply apparatuses 90a to 90e.

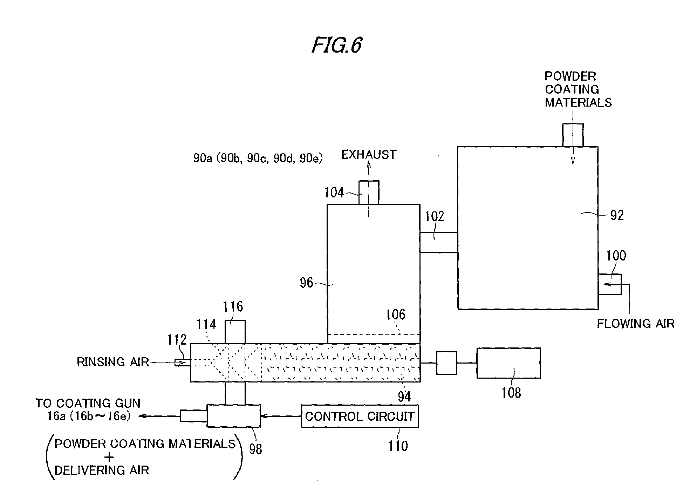

As shown in Fig. 6, each of the powder coating material supply apparatuses 90a to 90e includes a first storage container 92 for storing the powder coating materials therein, a second storage container 96 for storing therein the powder coating materials supplied from the first storage container once and for supplying only the necessary quantity of powder coating materials to a screw conveyor 94, and an injector 98 for supplying the powder coating material conveyed by the screw conveyor to its associated one of the coating guns 16a to 16e.

On the first storage container 92, there is provided an introduction pipe 100 for introducing the flowing air into the first storage container 92. Due to the flowing air introduced through the introduction pipe 100, the powder coating materials are turned into its flow state. That is, the powder coating materials are stored in the flow state within the first storage container 92 and, due to the pressure that is applied thereto from the flowing air, the powder coating materials are supplied through a bridge pipe 102 to the second storage container 96. Here, the flowing air is exhausted through an exhaust pipe 104 which is provided on the upper portion of the second storage container 96.

On the bottom portion of the second storage container 96, there is provided a mesh 106. The is mesh 106 can be vibrated by a vibrator (not shown) and, due to the vibratory motion of the mesh 106, the powder coating materials can be moved down bit by bit toward the screw conveyor 94.

The screw conveyor 94 can be rotated when it is driven by a motor 108. With the rotational motion of the screw conveyor 94, the powder coating materials can be supplied toward the injector 98.

To the injector 98, there is supplied the delivering air. As will be described later, the quantity of the delivering air can be controlled under the control operation of a first control circuit 110. That is, the powder coating materials are delivered to the coating guns 16a to 16e while they are accompanied by the delivering air the quantity of which is controlled in this manner.

Here, reference numerals 112, 114 and 116 in Fig. 6 respectively designate a rinsing pipe for introducing the rinsing air, a rectifier plate, and an internal check pipe which includes a check opening.

On each of the above-structured powder coating material supply apparatuses 90a to 90e, there is provided an air quantity meter (not shown) which is used to detect the quantity of the delivering air to be supplied to the injector 98. Here, instead of the air quantity meter, there may also be used an air speed meter. In this case, the quantity of the delivering air may be automatically calculated according to the air speed and the diameter of a supply pipe by which the delivering air is supplied.

On the other hand, the powder coating material collecting mechanism includes a fan 120 (a suction mechanism) shown in Fig. 1. Therefore, when the powder coating material collecting mechanism is energized, the air within the coating booth 14 is sucked through the duct hoses 58a to 58j under the operation of the fan 120.

The suction quantity per unit time of the fan 120, in other words, the quantity of the air to be exhausted from the coating booth 14 (exhaust air quantity) is controlled by a second control circuit 122. Here, the second control circuit 122 has also a function to control the shifting speed of the base member 26 and thus the shifting speed of the work W.

The powder coating apparatus 10 according to the present exemplary embodiment, basically, is structured in the above-mentioned manner. Next, description will be given below of the operations and operation effects of the powder coating apparatus 10.

Firstly, the work W is placed onto the respective placing/fixing bases constituting the work fixing base 22 and, after then, the work W or work fixing base 22 is electrically connected to the ground. Further, the delivery mechanism 12 is energized and, with the energization of the delivery mechanism 12, the base member 26 and thus the work W is moved along the arrow mark Z direction toward the coating booth 14 while it is being guided by the delivering guide rail 20. As described above, the shifting speed of the movement of the work W is controlled properly in such a manner that it can keep a speed previously set in the second control circuit 122.

Simultaneously with this, the powder coating material supply apparatuses 90a to 90e are energized respectively. That is, the flowing air is introduced through the introduction pipe 100 into the first storage container 92. And, with the introduction of the flowing air, the powder coating materials, which have turned into its flow state, are supplied through the bridge pipe 102 to the second storage container 96. The powder coating materials are allowed to pass through the mesh 106 provided within the second storage container 96, and are then supplied to the injector 98 by the screw conveyor 94.

To the injector 98, there is supplied the delivering air the quantity of which is set to a given quantity under the control of the first control circuit 110. Therefore, the powder coating materials are mixed with the delivering air within the injector 98, and the powder coating materials are delivered to the coating guns 16a to 16e while they are accompanied by the delivering air.

After then, the powder coating materials move from the respective gun main bodies 80 of the coating guns 16a to 16e and arrives at the openings of the terminals ends of the respective nozzle tubes 82. During this, the powder coating materials are slidingly contacted with the gun main bodies 80 and nozzle tubes 82 and, due to the friction that is produced between them, the powder coating materials are electrically charged. That is, the powder coating materials, while they are electrically charged, are discharged from the above openings, that is, the communication holes 86 (discharge openings), and are sprayed into the coating booth 14 together with the delivering air.

The discharge quantity of the delivering air and powder coating materials in the coating guns 16a, 16b of the side wall 36 and the discharge quantity of the coating guns 16c, 16d of the side wall 38, in which the gun main bodies 80, 80 are disposed opposed to each other, are set in the following manner. That is, the discharge quantity from the discharge openings 86 of the coating guns 16a, 16b: the discharge quantity from the discharge openings 86 of the coating guns 16c, 16d = 100:80 to 120. Therefore, the discharge quantity of the powder coating materials and delivering air to be sprayed into the coating booth 14 can satisfy the following relationship, that is, the discharge quantity from the discharge openings 86 of the coating guns 16a, 16b: the discharge quantity from the discharge openings 86 of the coating guns 16c, 16d = 100: 80 to 120.

In other words, for example, when the discharge quantity of the powder coating materials and delivering air to be sprayed from the discharge openings 86 of the coating guns 16a, 16b is 1 m³/sec, the discharge quantity from the discharge openings 86 of the coating guns 16c, 16d is set in the range of 0.8 to 1.2 m³/sec. As will be described later, preferably, the discharge quantity from the discharge openings 86 of the coating guns 16a, 16b and the discharge quantity from the discharge openings 86 of the coating guns 16c, 16d may be the same: that is, most preferably, for example, both may be 1 m³/sec.

On the other hand, the powder coating material collecting mechanism is energized. Owing to the energization of the mechanism, the air existing within the coating booth 14 can be sucked under the operation of the fan 120 through the duct hoses 58a to 58j respectively connected to the duct hose connecting portions 54, 56, 76a to 76d and 78a to 78d.

According to the present embodiment, the suction quantity of the fan 120 is set such that the total of the discharge quantities from the coating guns 16a to 16e: the suction quantity of the fan 120 = 100: 80 to 120. Due to this, the exhaust quantity of the air (containing the uncoated powder coating materials) to be sucked from within the coating booth 14 can satisfy the relationship, the total of the discharge quantities from the coating guns 16a to 16e: the exhaust quantity from within the coating booth 14 = 100: 80 to 120.

For example, when the total of the discharge quantities of the powder coating materials and delivering air to be sprayed from the coating guns 16a to 16e is 3 m³/sec, preferably, the exhaust quantity from within the coating booth 14 (the suction quantity of the fan 120) may be set in the range of 2.4 to 3.6 m³/sec. Most preferably, the exhaust quantity from within the coating booth 14 may be equal to the total discharge quantity of the powder coating materials and delivering air to be sprayed from the coating guns 16a to 16e, that is, for example, both may be 3 m³/sec.

Here, the discharge quantity of the powder coating materials and delivering air to be sprayed from the discharge opening 86 of the coating gun 16e may be such level of quantity that can direct the powder coating materials to be sprayed from the discharge openings 86 of the coating guns 16a to 16e toward the work W. For example, there may be set the ratio that can satisfy the following relationship, namely, the discharge quantity from the discharge openings 86 of the coating guns 16a and 16b (or coating guns 16c and 16d): the discharge quantity from the discharge opening 86 of the coating gun 16e = 100: 80 to 120. However, this is not limitative.

Here, the control of the respective discharge quantities of the coating guns 16a to 16e is carried out by the first control circuit 110 which controls the quantity of the delivering air to be supplied to the injector 98. That is, the quantity of the delivering air, as described above, is measured by the air quantity meter (or air speed meter). When receiving the feedback of this measured value, the first control circuit 110 controls the quantity of the delivering air in such a manner that it is approximate to a previously set given value.

When controlling the total of the discharge quantities of the coating guns 16a to 16e using only a single control circuit, for example, in the case that the inner walls of pipes bridged from the injector 98 to the coating guns 16a to 16e are different in frictional resistance from each other, there is a possibility that the quantities of the delivering air to be discharged from the coating guns 16a to 16e can be different from each other. However, in the case of the present exemplary embodiment where the first control circuits 110 are provided apiece on the powder coating material supply apparatuses 90a to 90e respectively disposed upstream of the coating guns 16a to 16e, the quantities of the delivering air to be discharged from the coating guns 16a to 16e can be controlled. Therefore, the quantities of the delivering air can be set substantially equal to each other.

Further, according to the present exemplary embodiment, as described above, it is possible to prevent the open air from entering inside the coating booth 14. This is because the outer peripheral wall of the nozzle tube 82 and the inner peripheral wall of the communication hole 86 can be kept air tight with respect to each other, and also because the connecting portions between the side walls 36, 38 and bottom wall 34, upstream side wall 42, downstream side wall 44 and ceiling wall 40 are strongly closely contacted with each other and also these connecting portions are sealed.

This can prevent the air from flowing from the peripheries of the coating guns 16a to 16e into the coating booth 14. Therefore, it is possible to prevent the flown-in air from having influences on the discharge quantities of the coating guns 16a to 16e. As a result of this, the discharge quantity can be controlled more accurately and also it is easy to balance the discharge quantity and suction quantity accurately.

The work W and cylindrical member 39 pass through the introduction opening 46 of the upstream side wall 42 of the coating booth 14 and the clearance 66 between the inclined portions 62 and 64, while they move slowly at a given speed within the coating booth 14.

As described above, the work W is connected directly or indirectly through the work fixing base 22 to the ground. Owing to this, the powder coating materials, which have been discharged in a charged state, are attracted to the work W due to the electrostatic action that is generated between them, with the result that the powder coating materials are coated onto the work W.

On the other hand, some of the powder coating materials sprayed into the coating booth 14 are diffused within the coating booth 14 as the delivering air diffuses within the coating booth 14. In an ordinary powder coating apparatus, for example, kinetic energy, which is applied by the delivering air to the powder coating materials diffusing toward the ceiling wall 40, is larger than kinetic energy which is going toward the work W due to the above electrostatic action. Therefore, it is not easy to coat the work W with the diffusing powder coating materials.

However, in the present exemplary embodiment, since the coating gun 16c is disposed substantially opposed to the coating gun 16a, as shown in Fig. 2, the flow of the powder coating materials and delivering air discharged and sprayed from the coating gun 16a is allowed to collide with the flow of the powder coating materials and delivering air discharged and sprayed from the coating gun 16c. In other words, discharge patterns from the coating guns 16a and 16c interfere with each other. Of course, similarly, discharge patterns from the coating guns 16b and 16d also interfere with each other.

Therefore, within the coating booth 14, the powder coating materials and delivering air diffusing toward the ceiling wall 40 are caused to collide with each other, resulting in a state where the kinetic energy of the powder coating materials applied from the delivering air when they are discharged can be offset. Due to this, the powder coating materials are caused to diffuse and float in the periphery of the work W.

In addition, according to the present embodiment, on the ceiling wall 40, there is provided the coating gun 16e. A discharge pattern in this coating gun 16e interferes with the powder coating materials and delivering air which have been discharged from the coating guns 16a to 16d and are going to diffuse upwardly, thereby preventing the powder coating materials and delivering air from diffusing toward the ceiling wall 40 any further. Due to such interference, the diffusing and floating powder coating materials are caused to flow toward the work W.

On the other hand, the powder coating materials and delivering air, which have diffused toward the bottom wall 34, are also caused to collide with each other, resulting in a state where the powder coating materials are diffusing and floating in the periphery of the work W.

Also, the inclined portions 62 and 64 function as so called interference plates which interfere with the flow of the powder coating materials and delivering air diffusing toward the bottom wall 34, whereby there is generated the flow that goes toward the work W existing upwardly.

As described above, according to the present exemplary embodiment, the communication holes 86 and 86 of the side walls 36 and 38, that is, the discharge openings of the coating guns 16a to 16d are formed substantially opposed to each other, whereby the discharge patterns of the powder coating materials and delivering air to be discharged and sprayed through the communication holes 86, 86 are allowed to interfere with each other. Also, on the ceiling wall 40 as well, there is provided the coating gun 16e the discharge pattern of which interferes with the discharge patterns of the coating guns 16a to 16d. Due to this, the kinetic energy of the powder coating materials can be lost and thus the powder coating materials can be turned into a state where they can be easily attracted toward the work W.

In addition, on the inner wall of the coating booth 14, there is provided a protection member 79 which is made of an insulating material such as polyester foam. Since the protection member 79 is an electrically insulating member, it is possible to prevent an electrostatic action from functioning between the powder coating materials and the protection member 79. Owing to this, the powder coating materials can be attracted toward the work W more easily.

That is, in this case, most of the powder coating materials discharged and sprayed into the coating booth 14 can be moved toward the work W. Therefore, since the coating efficiency of the powder coating materials onto the work W is enhanced, when compared with a case where a powder coating operation is carried out using an ordinary coating booth, the quantity of the uncoated powder coating materials can be reduced.

Also, as described above, since the powder coating materials, after they diffuse and float, stick to the object to be coated, regardless of the shape of the object to be coated, the thicknesses of the coated films can be made substantially uniform over the whole of the object to be coated. That is, it is also easy to obtain coated films the thicknesses of which are substantially uniform.

And, for example, when the electrostatic coating operation is carried out using a robot holding a coating tool, in order to make substantially uniform the thicknesses of the coated films, it is necessary to carry out such a strict teaching on the robot as to be able to produce a focus corresponding to such uniform thicknesses. On the other hand, according to the present embodiment, the thicknesses of the coated films can be made substantially uniform without carrying out such strict teaching. That is, there can be eliminated a troublesome operation and thus the execution of the electrostatic coating on the object to be coated can be facilitated.

While the powder coating operation is being carried out in this manner, as described above, the air within the coating booth 14 is being sucked. Therefore, the powder coating materials discharged into the coating booth 14 can be prevented from leaking through the hood portions 68 and 70. Also, the air, which is going to flow into the coating booth 14 through the introduction opening 46 and discharge opening 48, is sucked in through the above-mentioned duct hoses respectively connected to the duct hose connecting portions 76a to 76d, 78a to 78d formed in their associated hood portions 68 and 70. This can prevent dust or the like from being mixed from into the coating booth 14 from outside.

As described above, due to formation of the duct hose connecting portions 76a to 76d, 78a to 78d in their associated hood portions 68 and 70, in other words, due to formation of the suction openings, without balancing the pressure of the interior portion of the coating booth 14 and the pressure of the outside with each other, the leakage of the powder coating materials from within the coating booth 14 and the mixture of dust or the like into the coating booth 14 from outside can be both prevented.

Also, as described above, the duct hose connecting portions 76a to 76d, 78a to 78d are situated at positions which correspond to the vertexes of a quadrangle. Therefore, the air existing within the coating booth 14 can be sucked into the duct hose connecting portions 76a to 76d, 78a to 78d with high efficiency. That is, due to formation of the duct hose connecting portions 76a to 76d, 78a to 78d at the positions that respectively correspond to the vertexes of a quadrangle, there can be obtained a so called rectification effect.

While most of the uncoated powder coating materials are sucked through the duct hoses 58a, 58b respectively connected to the duct hose connecting portions 54, 56, some of them are sucked through the duct hoses 58c to 58f, 58g to 58j respectively connected to the duct hose connecting portions 76a to 76d, 78a to 78d. Thus, the powder coating materials, which have been sucked through the duct hose connecting portions 54, 56, 76a to 76d, 78a to 78d in this manner, are finally collected by the powder coating material collecting mechanism.

That is, according to the present exemplary embodiment, the powder coating materials are sucked and collected from both lateral sides of the coating booth 14 and from the respective neighboring portions of the introduction opening 46 and discharge opening 48. Thus, due to employment of a structure for collecting the powder coating materials from the multiple portions of the coating booth 14, the quantity of the powder coating materials remaining within the coating booth 14 can be reduced. In other words, the collection efficiency can be enhanced.

Of course, the collected powder coating materials receive a proper recycling treatment and, after then, they are returned to the discharge mechanism and are discharged again from any one of the coating guns 16a to 16e. This can enhance the collection efficiency and also can enhance the use efficiency of the powder coating materials.

In this case, as described above, since the uncoated powder coating material are reduced, the quantity of the powder coating materials to be collected is also reduced. This can reduce the quantity of the powder coating materials to be recycled for re-use of the powder coating materials, thereby providing an advantage that the cost of the powder coating material recycling treatment can be reduced.

Here, in the case of the uncoated powder coating materials which are not stuck to the work W but are floating, similarly to the above, there is prevented the electrostatic action from functioning between the protection member 79 and such powder coating materials. Owing to this, the uncoated coating materials can also be prevented from sticking to the protection member 79 and thus can be efficiency collected by the collecting mechanism through the duct hose connecting portions 54, 56 and their associated duct hoses. That is, the collection efficiency of the uncoated powder coating materials can be enhanced.

Further, according to the present exemplary embodiment, the gun main bodies 80 and nozzle tubes 82, which constitute the coating guns 16a to 16e, are not exposed to the interior portion of the coating booth 14. This eliminates a possibility that the powder coating materials can be coated onto the coating guns 16a to 16e, thereby reducing greatly the frequency of the maintenance of the coating guns 16a to 16e. In the long run, since the frequency of interruption of the coating operation for maintaining the coating guns 16a to 16e is reduced, the efficiency of the operation to coat the work W with the powder coating materials can also be enhanced.

After the work W is coated in this manner, with the continuous shifting movement of the base member 26, the coated work W is allowed to pass through the introduction opening 48 of the downstream side wall 44 and is exposed (delivered) from the coating booth 14.

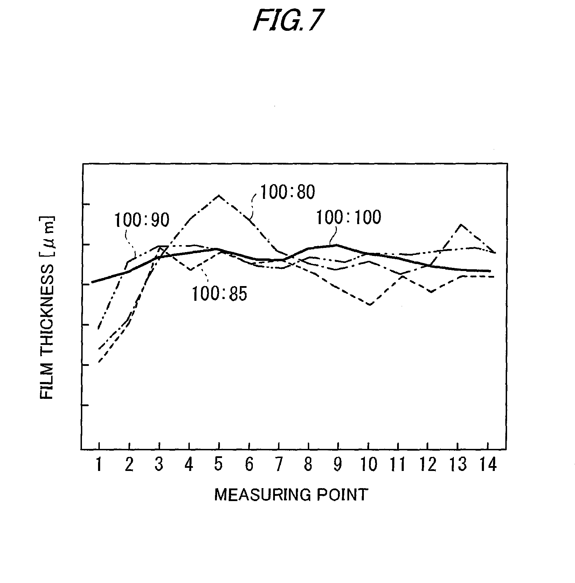

Here, the above-mentioned powder coating operation was carried out on multiple works W respectively having the same shape under the following conditions. That is, the discharge quantity from the discharge openings 86 of the coating guns 16a and 16b of the side wall 36 and the discharge quantity from the discharge opening 86 of the coating gun 16e of the ceiling wall 40 were respectively set constant, while the discharge quantity from the discharge openings of the coating guns 16c and 16d was caused to vary. After then, from the works W that had been coated, there were selected fourteen arbitrary measuring points, and the thicknesses of the coated films in the respective measuring points were measured. Fig. 7 shows the results of these measurements. Here, as shown in Fig. 7, it was supposed that the discharge quantity from the discharge openings 86 of the coating guns 16a and 16b of the side wall 36: the discharge quantity from the discharge openings of the coating guns 16c and 16d = 100: 80, 100: 85, 100: 90 and 100: 100. And, the discharge quantity from the discharge opening 86 of the coating gun 16e of the ceiling wall 40 was set equal to the discharge quantity from the discharge openings 86 of the coating guns 16a and 16b of the side wall 36. Also, in all cases, the total of discharge quantities from the coating guns 16a to 16e: the suction quantity of the fan 120 (the exhaust quantity from the coating booth 14) = 100: 100. And, even in different works W, the same portions thereof are selected as the measuring points.

Fig. 7 shows that, when the discharge quantity from the discharge openings 86 of the coating guns 16a and 16b of the side wall 36: the discharge quantity from the discharge openings 86 of the coating guns 16c and 16d of the side wall 38 = 100: 80 to 120, variations in the thicknesses of the coated films are small. That is, by satisfying the relationship that the discharge quantity from the discharge openings 86 of the coating guns 16a and 16b of the side wall 36: the discharge quantity from the discharge openings 86 of the coating guns 16c and 16d of the side wall 38 = 100: 80 to 120, the thicknesses of the coated films can be easily made uniform.

Also, although not shown, when the discharge quantity from the discharge openings 86 of the coating guns 16a and 16b of the side wall 36: the discharge quantity from the discharge openings 86 of the coating guns 16c and 16d of the side wall 38 is set such that 100: 100, and the total discharge quantity from the coating guns 16a to 16e: the suction quantity of the fan 120 (the exhaust quantity from the coating booth 14) is set such that 100: 80 to 120, there were obtained substantially the same results as those shown in Fig. 7.

As can be understood from the above description, according to the present exemplary embodiment in which the discharge quantity from the discharge openings 86 of the coating guns 16a and 16b of the side wall 36 and the discharge quantity from the discharge openings 86 of the coating guns 16c and 16d of the side wall 38 are set substantially equal to each other, and the total of the discharge quantities from the coating guns 16a to 16e and the exhaust quantity from the coating booth 14 are set substantially equal to each other, there can be obtained coated films the thicknesses of which little vary regardless of the portions of the work W, in other words, there can be obtained coated films the thicknesses of which are substantially uniform over the whole of the work W.

The reasons for the above effects are as follows. That is, firstly, since the discharge quantity from the discharge openings 86 of the coating guns 16a and 16b of the side wall 36: the discharge quantity from the discharge openings 86 of the coating guns 16c and 16d of the side wall 38 is set such that 100: 80 to 120, it can be guessed that the powder coating materials are allowed to float substantially evenly in the periphery of the work W and, in this state, the powder coating materials are attracted to the periphery of the work W. That is, in the case that the powder coating materials are floating unevenly, when the powder coating materials are attracted to the work W, in the vicinity of the portions where the powder coating materials collect densely, the thicknesses of the coated films become large; but, reversely, in the vicinity of the portions where the powder coating materials exist sparsely, the thicknesses of the coated films become small.

And, since the total of discharge quantities from the coating guns 16a to 16e and the suction quantity of the fan 120 are set in the ratio of 100: 80 to 120, the pressure within the coating booth 14 provides a state where it is neither positive nor negative. In other words, the pressure within the coating booth 14 is kept in a proper pressure. Due to this, there are eliminated a possibility that the powder coating materials floating within the coating booth 14 can be discharged to the outside of the coating booth 14 before they are attracted to the work W, and also a possibility that the collection of the uncoated powder coating materials from within the coating booth 14 can be made difficult.

That is, in the vicinity of the work W, the powder coating materials are allowed to float stably. Also, the uncoated powder coating materials can be collected quickly. Owing to this, while efficiently coating the work W with the powder coating materials, the uncoated powder coating materials can be collected efficiently.

In short, according to the present embodiment, coated films the thicknesses of which are substantially uniform can be produced efficiently and also the collection efficiency of the uncoated powder coating materials can be enhanced.

In the case that a coating color to be applied to the work W is changed, there may be selected the powder coating materials that correspond to the coating color. In this case, in an ordinary coating booth, in order to eliminate a possibility that the remaining powder coating materials can be mixed into new powder coating materials to cause the coating color to become dirty, it is necessary to clean the coating booth before the new powder coating materials are charged into the coating booth. On the other hand, according to the present embodiment, as described above, since the powder coating materials can be prevented from sticking to the protection member 79, the protection member 79 and thus the interior portion of the coating booth 14 can become dirty only slightly. Therefore, the coating booth 14 may be cleaned only simply and thus the time necessary for the cleaning operation can be reduced accordingly. With the reduced cleaning time, the coating cycle time can also be reduced.

In this case, only the air may be supplied from the coating gun 16e provided on the ceiling wall 40, whereby the powder coating materials sticking to the protection member 79 constituting the inner wall of the coating booth 14 can be removed.

Or, there may also be formed a discharge opening which penetrates through the coating booth 14 and protection member 79; and, compressed gas such as compressed air and compressed nitrogen may be discharged from this discharge opening to thereby remove the powder coating materials sticking to the protection member 79 (the inner wall of the coating booth 14) therefrom. Here, in the case that the discharge opening is formed, simultaneously with the execution of the above-mentioned coating operation, there can also be carried out an air blow operation on the protection member 79 (the inner wall of the coating booth 14) using the compressed air that is discharged from the discharge opening.

Here, in the above-mentioned embodiment, the duct hoses 58c to 58f are respectively joined to the duct hose 58a, the duct hoses 58g to 58j are respectively joined to the duct hose 58b, and the duct hoses 58a and 58b are joined to each other. However, alternatively, the duct hoses 58a and 58b are respectively connected to the powder coating material collecting mechanism, and the duct hoses 58c to 58f, 58g to 58j may not be joined to the duct hoses 58a and 58b but may be connected to the powder coating material collecting mechanism.

In this case, when the total of the discharge quantities from the coating guns 16a to 16e is set for 100, the total of the exhaust quantity from the duct hoses 58a, 58b and the exhaust quantity from the duct hoses 58c to 58f, 58g to 58j may be set in the range of 80 to 120.

Also, in the present embodiment, in the neighboring portions of the introduction opening 46 and discharge opening 48, there are formed the four duct hose connecting portions 76a to 76d, 78a to 78d (exhaust openings) respectively. However, the number of exhaust openings is not limited to this specifically but, for example, it may be 6 or 8. Of course, it may also be other number than them.

Further, it is not essential to form the hood portions 68, 70. Alternatively, there may also be formed exhaust openings directly in the vicinity of the introduction opening 46 and discharge opening 48 in the upstream side wall 42 and downstream side wall 44.

Further, in the present embodiment, for the bottom wall 34, there is formed the clearance 66 and the work W is supported on the cylindrical member 30 that has been inserted into the clearance 66. However, instead of this, there may also be formed a clearance for the ceiling wall 40 and the work W may be supported on a hanging member inserted through this clearance; and, the coating gun 16e may be provided on the bottom wall 34. In this case, when the coating booth is cleaned before changing the coating color to be applied to the work W, it is also possible to suck the air together with the remaining powder coating materials from the coating gun 16e.

Here, in the above-mentioned embodiment, the leading end faces of the terminal ends of the respective nozzle tubes 82 of the coating guns 16a to 16e are respectively situated in the intermediate portions of the communication hole 86. However, these leading end faces may also be formed to be flush with the inner walls of the side walls 36, 38 or the inner wall of the ceiling wall 40.

Also, in the present embodiment, the gun main bodies 80 of the coating guns 16c and 16d are disposed substantially opposed to the gun main bodies 80 of the coating guns 16a and 16b respectively. However, the communication holes 86 (discharge openings) may only be disposed opposed to each other and thus the discharge patterns thereof may interfere with each other; and thus, it is not always necessary that the gun main bodies 80, 80 should be disposed opposed to each other.

In addition, in the present embodiment, the coating guns 16a, 16b of the side wall 36 and the coating guns 16c, 16d of the side wall 38 are disposed opposed to each other. However, even in the case that the coating guns 16a, 16b of the side wall 36 and the coating guns 16c, 16d of the side wall 38 are disposed at arbitrary positions where they are not opposed to each other, when the total of the discharge quantities of the coating guns 16a, 16b of the side wall 36: the total of the discharge quantities of the coating guns 16c, 16d of the side wall 38 = 100: 80 to 120, there can be obtained the effects of the invention.

In any case, it is not always essential that the coating gun 16e should be provided on the ceiling wall 40 or bottom wall 34. That is, the powder coating apparatus may also be structured in such a manner that it excludes the coating gun 16e.

Also, in the present exemplary embodiment, on the side walls 36 and 38, there are provided the two coating guns apiece. However, even in the case that, on the side walls 36 and 38, there is provided a coating gun apiece, there can also be obtained the effects of the invention.

Also, on the respective side walls 36, 38 and ceiling wall 40 (or bottom wall 34), there may also be provided two or more coating guns apiece.

Further, instead of the above-mentioned frictional electric charging, the powder coating material may also be electrically charged due to corona charging.

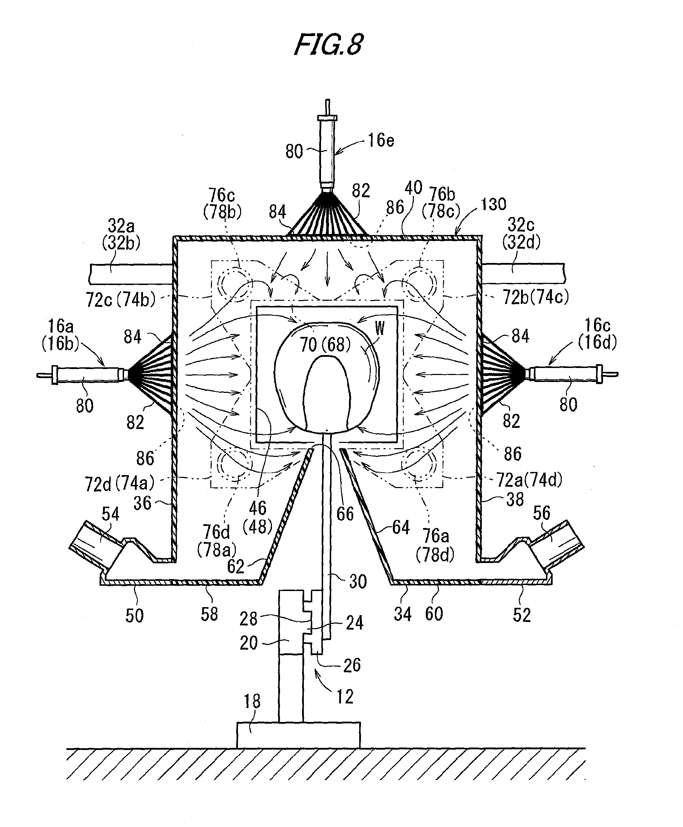

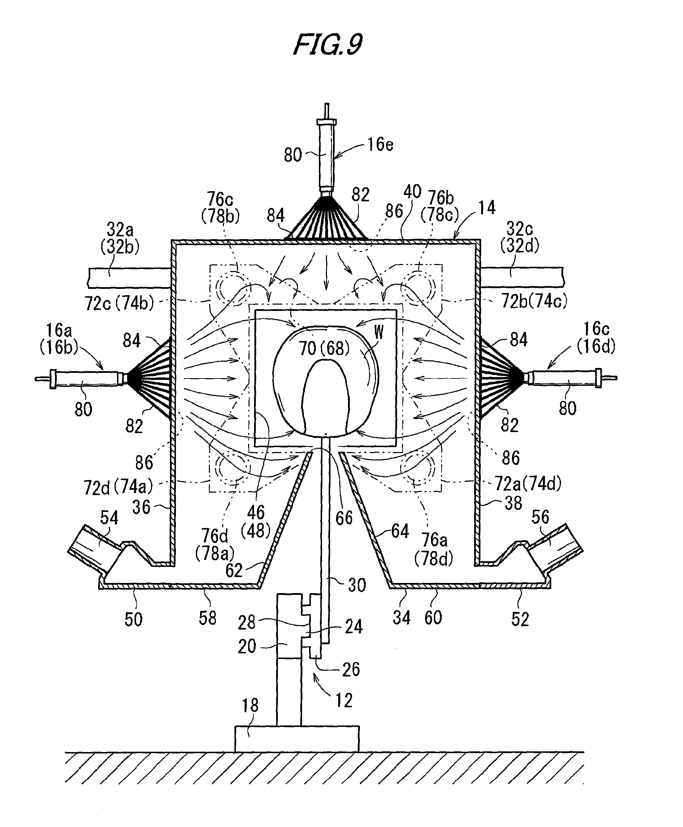

In addition, the invention is not limited to a structure in which the protection member 79 is provided on the inner wall of the coating booth 14. That is, for example, as shown in Fig. 8, the powder coating apparatus 10 may also be structured in such a manner that it includes a coating booth 130 constituted of an electrically insulating member. Or, as shown in Fig. 9, there may also be provided only the coating booth 14 which is constituted of a conductive member.

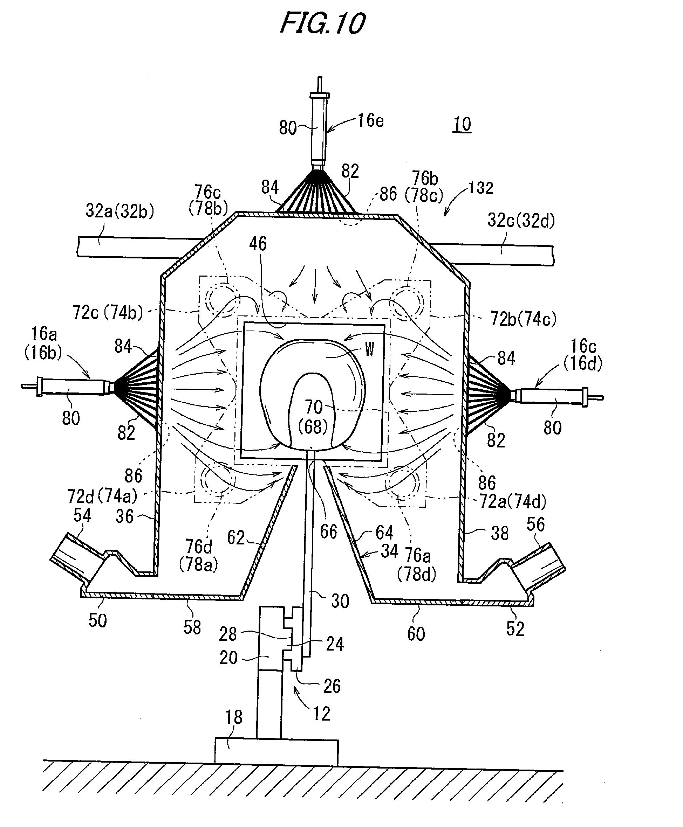

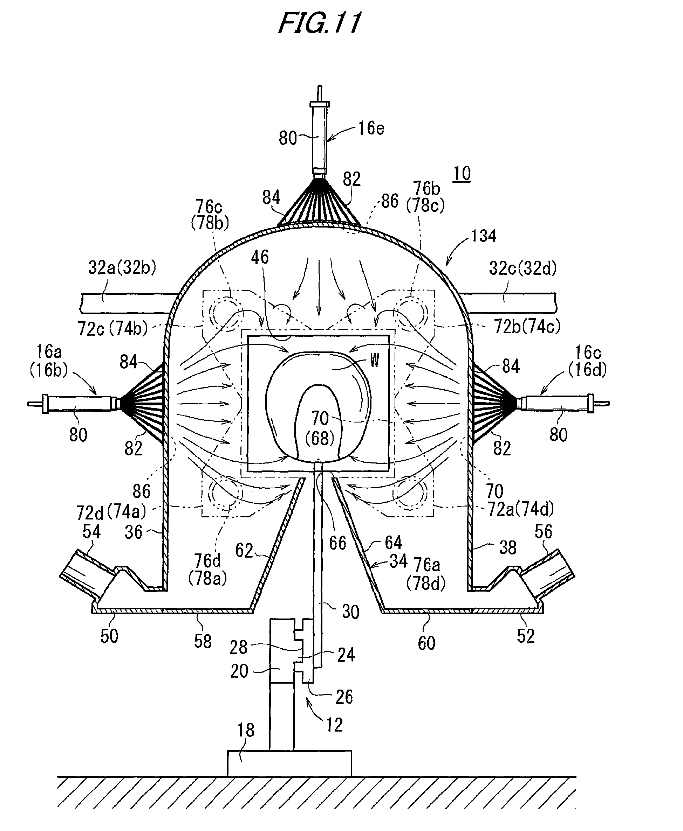

Also, as the coating booth, as shown in Fig. 10, there may be used a coating booth 132 the upper wall portions of which are bent formed in their mutually approaching directions as they become more distant from the work W serving as an object to be coated. Or, as shown in Fig. 11, there may also be used a coating booth 134 the upper walls portions of which are curved formed as they become more distant from the work W.

In the case that there is employed the coating booth 132 or 134, the powder coating materials discharged from the coating guns 16a to 16e are hard to stick to the wall portions of the coating booth 132 or 134. Therefore, for example, in the case that the protection member 79 is provided on the inner wall of the coating booth 132 or 134 and, when changing the coating color, the cleaning of the protection member 79 can be facilitated further. In other words, the cleaning time can be shortened further and, as a result of this, the cycle time can be shortened further.

In Figs. 10 and 11, there are illustrated cases in which the coating booths 132 and 134 are respectively constituted of a conductive member. However, of course, similarly to Fig. 1, the protect members 79 may also be situated on the respective inner walls of the coating booths, or similarly to Fig. 8, the coating booths 132 and 134 may be respectively constituted of an electrically insulating member.

And, instead of setting the suction quantity of the fan 120, for example, by setting the opening angle of a damper provided in an exhaust line (powder coating material collecting line), the exhaust quantity from the coating booth may also be controlled.

Further, instead of providing the air quantity meters (air speed meters) respectively in the powder coating material supply apparatuses 90a to 90e, there may also be provided air quantity meters (air speed meters) respectively in the coating guns 16a to 16e. Or, instead of controlling the air quantity using the first control circuit 110, there may also be provided a control valve and, by controlling the opening angle of the control valve, the air quantity may be controlled.

### Industrial Applicability:

The present invention can be applied to a powder coating apparatus and a powder coating method which respectively can apply powder coating materials to an object to be coated to thereby coat the same with the powder coating materials.

### Description of Reference Numerals and Signs:

- 10:: Powder coating apparatus
- 12:: Delivery mechanism
- 14, 130, 132, 134:: Coating booth
- 16a to 16e:: Coating gun
- 34:: Bottom wall
- 36, 38:: Side wall
- 40:: Ceiling wall
- 50, 52, 68, 70:: Hood portion
- 54, 56, 76a to 76d, 78a to 78d:: Duct hose connecting portion
- 58a to 58j:: Duct hose
- 66:: Clearance
- 72a to 72d, 74a to 74d:: Hollow flange portion
- 79:: Protection member
- 80:: Gun main body
- 82:: Nozzle tube
- 84:: Tube support member
- 86:: Communication hole
- 90a to 90e:: Powder coating material supply apparatus
- 98:: Injector
- 110, 122:: Control circuit
- 120:: Fan
- W:: Work

## Claims

1. A powder coating apparatus comprising:
a coating booth into which a ground-connected object to be coated is delivered; and
a plurality of coating tools respectively provided in the coating booth and configured to discharge electrically charged powder coating materials to the object to be coated,
wherein at least two of the coating tools are provided on walls of the coating booth in such a manner that their respective discharge openings configured to discharge the powder coating materials therefrom are disposed opposed to each other,
wherein the opposed discharge openings are configured to simultaneously discharge the powder coating materials to the object to be coated, and
wherein the powder coating materials discharged from one of said at least two coating tools and diffusing into an interior portion of the coating booth are delivered to the object to be coated by delivering air discharged together with the powder coating materials from the other of said at least two coating tools.

2. The powder coating apparatus according to Claim 1, wherein the discharge openings of said at least two coating tools are respectively formed in two side walls of the coating booth respectively extending substantially parallel to an advancing direction of the object to be coated in such a manner that they are disposed opposed to each other,
wherein at least one of the coating tools is disposed in a wall of the coating booth bridged between the two side walls and extending substantially parallel to the advancing direction of the object to be coated, and
wherein the powder coating materials discharged from the coating tool provided on the wall bridged between the two side walls are caused to collide with the powder coating materials discharged from the coating tools provided on the two side walls.

3. The powder coating apparatus according to Claim 1 or 2, wherein main bodies of the coating tools are respectively disposed on outer walls of the coating booth, and
wherein the discharge openings are respectively formed in inner walls of the coating booth.

4. A powder coating apparatus comprising:
a coating booth into which a ground-connected object to be coated is delivered and which includes an introduction opening through which the object to be coated is introduced and a discharge opening from which the object to be coated is discharged;
a coating tool provided on the coating booth and configured to discharge electrically charged powder coating materials to the object to be coated;
a powder coating material collecting mechanism including a suction mechanism configured to suck uncoated powder coating materials discharged from the coating tool but not coated onto the object to be coated; and
a plurality of duct hose connecting portions respectively provided in vicinities of the introduction opening and the discharge opening,
wherein the uncoated powder coating materials are sucked together with air existing inside and outside the coating booth from duct hoses respectively connected to the duct hose connecting portions and are collected by the powder coating material collecting mechanism.

5. The powder coating apparatus according to Claim 4, wherein at least four of the multiple duct hose connecting portions are respectively disposed at positions corresponding to corner portions of a quadrangle.

6. The powder coating apparatus according to Claim 4 or 5, wherein the duct hose connecting portions are respectively formed in hoods respectively mounted in the vicinities of the introduction opening and the discharge opening.

7. The powder coating apparatus according to Claim 6, wherein the hoods respectively include X-shaped portions and the duct hose connecting portions are formed in respective leading ends of the X-shaped portions.

8. The powder coating apparatus according to any one of Claims 4 to 7, wherein, in a bottom portion of an end face of the coating booth which is other than an end face where said duct hose connecting portions are provided, there are further formed other duct hose connecting portions than the duct hose connecting portions, and
the uncoated powder coating materials are also sucked from duct hoses respectively connected to the other duct hose connecting portions and are collected by the powder coating material collecting mechanism.

9. The powder coating apparatus according to any one of Claims 3, 7 and 8, wherein the coating booth is constituted of an electrically insulating member.

10. The powder coating apparatus according to any one of Claims 3, 7 and 8, wherein, on the inner wall of the coating booth, there is provided a protection member constituted of an electrically insulating member.

11. The powder coating apparatus according to any one of Claims 7 to 10, wherein walls of an upper portion of the coating booth are bent or curved in their mutually approaching direction as they become distant from the object to be coated.

12. The powder coating apparatus according to any one of Claims 7 to 11, wherein the coating booth includes a discharge opening configured to discharge compressed gas toward the interior portion of the coating booth.

13. A powder coating apparatus comprising:
a coating booth into which a ground-connected object to be coated is delivered;
a plurality of coating tools respectively provided on the coating booth and configured to discharge electrically charged powder coating materials together with delivering gas to the object to be coated, at least two of the coating tools being provided on two walls of the coating booth disposed opposed to each other; and
a control mechanism configured to control a discharge quantity of the powder coating materials and the delivering gas during discharging the powder coating materials and the delivering gas into the coating booth from discharge openings of said coating tools respectively provided on said walls,
wherein the control mechanism is configured to set the discharge quantity of the powder coating materials and the delivering gas during discharging into the coating booth from the respective discharge openings in a ratio expressed in an equation (1), and
wherein the equation (1) is:
the discharge quantity of the discharge opening of one of the two walls: the discharge quantity of the discharge opening of the other = 100: 80 to 120.

14. The powder coating apparatus according to Claim 13, further comprising a control mechanism configured to set a total of discharge quantities from all of the coating tools and a suction quantity of uncoated powder coating materials to be discharged from the coating booth in a ratio expressed in an equation (2),
wherein the equation (1) is:
the total of the discharge quantities: the suction quantity = 100: 80 to 120.

15. A powder coating method of discharging electrically charged powder coating materials from a plurality of coating tools and applying the powder coating materials onto a ground-connected object to be coated to thereby coat the object to be coated with the powder coating materials, the method comprising:
providing at least two of the coating tools on walls of the coating booth in such a manner that discharge openings for discharging the powder coating materials are disposed opposed to each other;
simultaneously discharging the powder coating materials from the respective opposed discharge openings to the object to be coated; and
moving the powder coating materials discharged from one of the coating tools and diffusing into the coating booth to the object to be coated by a delivering air discharged together with the powder coating materials from the other of the coating tools.

16. The powder coating method according to Claim 15, further comprising:
providing the discharge openings of said at least two of the coating tools on two side walls of the coating booth extending substantially parallel to an advancing direction of the object to be coated in such a manner that they are opposed to each other;
providing at least one of the coating tools on a wall of the coating booth bridged between said two side walls and extending substantially parallel to the advancing direction of the object to be coated; and
causing to collide the powder coating materials discharged from the coating tool on the wall bridged between the two side walls with the powder coating materials discharged from the coating tools respectively provided on the two side walls.

17. The powder coating method according to Claim 15 or 16, wherein main bodies of the coating tools are provided on outer walls of the coating booth, and the discharge openings are formed in inner walls of the coating booth.

18. A powder coating method of discharging electrically charged powder coating materials from a plurality of coating tools and applying the powder coating materials to a ground-connected object to be coated delivered into an interior portion of a coating booth to thereby coat the object to be coated with the powder coating materials, the method comprising:
forming an introduction opening for introducing the object to be coated thereinto and a discharge opening for discharging the object to be coated therefrom, in the coating booth;
providing a plurality of duct hose connecting portions in vicinities of the introduction opening and the discharge opening; and
sucking the powder coating materials discharged from the coating tools but not coated on the object to be coated from duct hoses respectively connected to the duct hose connecting portions together with air existing inside and outside the coating booth, and collecting the powder coating materials.

19. The powder coating method according to Claim 18, further comprising:
disposing at least four of the duct hose connecting portions in positions corresponding to corner portions of a quadrangle.

20. The powder coating method according to Claim 18 or 19, further comprising:
forming the duct hose connecting portions in hoods mounted in vicinities of the introduction opening and the discharge opening.

21. The powder coating method according to Claim 20, wherein the hoods respectively include X-shaped portions, and
wherein the multiple duct hose connecting portions are respectively formed in leading ends of the X-shaped portions.

22. The powder coating method according to any one of Claims 18 to 21, further comprising:
forming other duct hose connecting portions than the duct hose connecting portions, in a bottom portion of an end face of the coating booth which is other than an end face of where said duct hose connecting portions are formed; and
sucking and collecting the uncoated powder coating materials from duct hoses respectively connected to the other duct hose connecting portions.

23. The powder coating method according to any one of Claims 17, 21 and 22, further comprising: constituting the coating booth of an electrically insulating member.

24. The powder coating method according to any one of Claims 17, 21 and 22, further comprising: providing a protection member constituted of an electrically insulating member, in the inner wall of the coating booth.

25. The powder coating method according to any one of Claims 21 to 24, further comprising: forming walls of an upper portion of the coating booth in such a manner that, as they become distant from the object to be coated, they are bent or curved in a direction where they approach each other.

26. The powder coating method according to any one of Claims 21 to 25, further comprising: forming a discharge opening for discharging compressed gas toward the interior portion of the coating booth.

27. A powder coating method of delivering a ground-connected object to be coated into an interior portion of a coating booth and discharging electrically charged powder coating materials together with delivering gas from a plurality of coating tools attached to the coating booth to thereby coat the object to be coated with the powder coating materials, teh method comprising:
providing at least two of the coating tools in two walls constituting the coating booth and disposed opposed to each other; and
setting discharge quantities of the powder coating materials and the delivering gas during discharging into the coating booth from the respective discharge openings in a ratio expressed in an equation (3),
wherein the equation (3) is:
the discharge quantity of the discharge opening of one of the two walls: the discharge quantity of the discharge opening of the other of the two walls= 100: 80 to 120.

28. The powder coating method according to Claim 27, further comprising: setting a total of discharge quantities from all of the coating tools and suction quantity of uncoated powder coating materials exhausted from the coating booth in a ratio expressed in an equation (4),
wherein the equation (4) is:
the total of the discharge quantities: the suction quantity = 100: 80 to 120.
